# EUROPÄISCHE PATENTSCHRIFT

(11) **EP 0 818 492 B1**
(45) Veröffentlichungstag und Bekanntmachung des Hinweises auf die Patenterteilung: **03.09.2003**
(21) Anmeldenummer: 97110472.4
(22) Anmeldetag: 26.06.1997
(51) Int. Cl.: C08G 73/02, C08G 73/00, C09D 179/02, C09D 179/00, C08G 18/64, C08G 18/38

(54) **Wässrige Bindemittelkombination bestehend aus Polyaminen, Verfahren zu ihrer Herstellung und deren Verwendung in Lacken und Beschichtungen**
Aqueous binder combination based on polyamines, its process of manufacture and its use in paints and coatings
Combinaison aqueuse de liants à base de polyamines, son procédé de fabrication et son utilisation dans des peintures et des revêtements

(30) Priorität: 10.07.1996 DE 19627826
(43) Veröffentlichungstag der Anmeldung: 14.01.1998
(73) Patentinhaber: BAYER AG, 51368 Leverkusen (DE)
(72) Erfinder: Wamprecht, Christian, Dr., 41472 Neuss (DE); Laas, Hans-Josef, Dr., 50733 Köln (DE); Meixner, Jürgen, Dr., 47803 Krefeld (DE); Pedain, Josef, Dr., 51061 Köln (DE)

(56) Entgegenhaltungen:
- EP-A- 0 159 363
- EP-A- 0 273 243
- EP-A- 0 604 814
- EP-A- 0 755 958

## Beschreibung

Die vorliegende Erfindung betrifft eine wässrige Bindemittelkombination bestehend aus Polyaminen, ein Verfahren zur Herstellung dieser Bindemittelkombination und die Verwendung der so hergestellten Bindemittelkombination für wäßrige Lacke und Beschichtungen.

Wäßrige 2-Komponenten-Beschichtungsmittel sind seit einigen Jahren bekannt und beispielsweise beschrieben in folgenden Patentanmeldungen: EP-A 0 358 979 (Polyacrylatpolyol als Sekundardispersion und Polyisocyanat), DE-A 4 129 951 (Polyester oder Polyacrylatdispersion mit hydrophilem Reaktivverdünner und Polyisocyanat), DE-A 4 135 571 (Dispersion einer Mischung aus hydrophilem Polyester und hydrophilem Polyacrylat, kombiniert mit einem Polyisocyanat), DE-A 4 226 242 (Polyesterdispersion und Polyisocyanat), EP-A 0 443 138 (wasserverdünnbare, ionisch hydrophilierte Polyisocyanate), EP-A 0 496 205 (Polyester/Polyurethandispersion und Polyisocyanat), EP-A 0 540 985 (wasserverdünnbare, nichtionisch hydrophilierte Polyisocyanate), EP-A 0 543 228 (Polyester/Polyacrylatdispersion und Polyisocyanat), EP-A 0 557 844 (Emulsionscopolymerisatpolyol und Polyisocyanat). EP-A 0 639 594 (zumindest teilweise mit Polyaminen neutralisierte hydroxyfunktionelle Dispersion und Polyisocyanat) und EP-A 0 661 320 (kationisch stabilisierte Polyacrylatdispersion und Polyisocyanat).

In der EP-A 0 505 889 werden wäßrige Dispersionen von verkapselten Polyisocyanaten beschrieben. Diese werden hergestellt durch Dispergieren von Polyisocyanaten in Wasser und Zugabe von Polyaminen mit mehreren Aminogruppen, so daß durch Reaktion eine dichte Umhüllung der Polyisocyanattröpfchen mit einer Harnstoffhülle entsteht. Diese stabilen Polyisocyanatdispersionen können nach Zerstörung der Harnstoffhülle um die Polyisocyanattröpfchen weitere Reaktionen, z. B. mit Polyolen, eingehen. Die unter Verwendung dieser Polyisocyanatdispersionen hergestellten Überzugsmittel führen zu Überzügen, die eine nicht ausreichende Wasserbeständigkeit aufweisen.

Polyamine als Reaktionspartner von Polyisocyanaten sind in der Regel für 2-Komponentenlacke nicht geeignet, weil eine spontane Reaktion unter Harnstoffgruppenbildung stattfindet.

Es wurde nun gefunden, daß sich niedermolekulare Oligoester, die entweder durch Umesterung von Malein- bzw. Fumarsäuredi(cyclo)alkylestern mit Di-, Tri- oder Tetraolen oder durch Veresterung von Maleinsäureanhydrid, Maleinoder Fumarsäure mit Di-, Tri- oder Tetraolen und Monoalkoholen hergestellt werden und im statistischen Mittel 2 bis 4 Doppelbindungen pro Molekül aufweisen, gegebenenfalls in Abmischung mit weiteren ungesättigten Verbindungen, besonders gut mit (cyclo)aliphatischen Diaminen im Sinne einer Michael-Addition umsetzen lassen, wobei neue Polyamine entstehen, die, gegebenenfalls nach Neutralisation mit Carbonsäuren, wasserverdünnbar bzw. wasserlöslich sind und mit, gegebenenfalls hydrophilierten, Polyisocyanaten zu wäßrigen 2-Komponenten-Beschichtungsmittel kombiniert werden können, wobei diese Beschichtungsmittel eine ausreichende Verarbeitungszeit von mehreren Stunden aufweisen. Aufgrund der Tatsache, daß Polyamine mit Polyisocyanaten in aller Regel eine spontane Reaktion eingehen, war die Herstellung dieser neuen wäßrigen 2-Komponenten-Beschichtungsmittel völlig überraschend und nicht vorhersehbar. Lackfilme auf Basis dieser neuen Beschichtungsmittel trocknen schnell und blasenfrei auf und sind nach kurzer Zeit gegen übliche Lösemittel und Wasser resistent.

Gegenstand der Erfindung sind Polyamine, die durch Umsetzung von
a) ungesättigten Oligoestern mit im statistischen Mittel 2 bis 4 Doppelbindungen pro Molekül,
b) gegebenenfalls weiteren als Michael-Akzeptor geeigneten ungesättigten Verbindungen mit im statistischen Mittel 1 bis 4 Doppelbindungen pro Molekül,
c) (cyclo)aliphatischen Diaminen mit zwei primären Aminogruppen und
d) gegebenenfalls weiteren als Michael-Donator geeigneten aminofunktionellen Verbindungen
hergestellt werden und, gegebenenfalls nach Neutralisation mit Carbonsäuren, in Wasser gelöst, dispergiert oder mit Wasser verdünnt werden.

Gegenstand der Erfindung ist weiterhin ein Verfahren zur Herstellung von Polyaminen mit vorzugsweise endständigen NH₂-Gruppen durch Umsetzung von ungesättigten Oligoestern, hergestellt entweder durch Umesterung von Malein- oder Fumarsäuredi(cyclo)alkylestern mit Di-, Tri- oder Tetraolen oder durch Veresterung von Maleinsäureanhydrid, Malein- oder Fumarsäure mit Di-, Tri- oder Tetraolen und Monoalkoholen, mit im statistischen Mittel 2 bis 4 Doppelbindungen pro Molekül und gegebenenfalls weiteren ungesättigten Verbindungen mit (cyclo)aliphatischen Diaminen und gegebenenfalls weiteren aminofunktionellen Verbindungen im Sinne einer Michael-Addition, wobei diese Polyamine, gegebenenfalls nach Neutralisation mit einer Carbonsäure, in Wasser gelöst, dispergiert oder mit Wasser verdünnt werden können.

Gegenstand der Erfindung ist schließlich auch die Verwendung der erfindungsgemäßen Polyamine als Bindemittelkomponente A) in wäßrigen Lacken und Beschichtungsmitteln, insbesondere als Reaktionspartner für Polyisocyanate B) in wäßrigen 2-Komponentenlacken sowie die dabei erhältlichen Lacke und Beschichtungsmittel.

Die erfindungsgemäßen Polyamine in der Bindemittelkomponente A) setzen sich aus folgenden Bestandteilen zusammen:
a) ungesättigten Oligoestern, die entweder durch Umesterung von Maleinund/oder Fumarsäuredi(cyclo)alkylestern mit Di-, Tri- und/oder Tetraolen oder durch Veresterung von Maleinsäureanhydrid, Malein- und/oder Fumarsäure mit Di-, Tri- und/oder Tetraolen und Monoalkoholen hergestellt werden und im statistischen Mittel 2 bis 4 Doppelbindungen pro Molekül aufweisen, die als Michael-Akzeptoren fungieren können,
b) gegebenenfalls weiteren ungesättigten Verbindungen, die als Michael-Akzeptoren fungieren können,
c) (cyclo)aliphatischen Diaminen mit zwei primären Aminogruppen (NH₂), die als Michael-Donatoren fungieren können und
d) gegebenenfalls weiteren aminofunktionellen Verbindungen, die als Michael-Donatoren fungieren können.

Bei den ungesättigten Oligoestern a) handelt es sich entweder um Umesterungsprodukte, die bei der Umesterung von Malein- und/oder Fumarsäuredi(cyclo)alkylestern mit Di-, Tri- und/oder Tetraolen entstehen, oder um Veresterungsprodukte von Maleinsäureanhydrid, Malein- und/oder Fumarsäure mit Di-, Tri- und/oder Tetraolen und Monoalkoholen. Die ungesättigten Oligoester a) weisen im statistischen Mittel 2 bis 4, vorzugsweise 2 bis 3 Doppelbindungen pro Molekül auf.

Für die Umesterung geeignete Malein- bzw. Fumarsäuredi(cyclo)alkylester haben 1 bis 8 Kohlenstoffatome im (Cyclo)alkylrest, wie z. B. Maleinsäuredimethylester, Maleinsäurediethylester, Maleinsäuredi-n-propylester, Maleinsäurediisopropylester, Maleinsäuredi-n-butylester, Maleinsäurediisobutylester, Maleinsäuredi-n-hexylester, Maleinsäuredi-2-ethylhexylester, Maleinsäuredicyclohexylester und die entsprechenden Fumarsäurediester. Bevorzugt sind Maleinsäuredimethyl-, Maleinsäurediethylund Maleinsäuredi-n-butylester.

Für die Umesterung geeignete Di-, Tri- und/oder Tetraole sind lineare oder verzweigte gesättigte, gegebenenfalls Ethersauerstoffatome enthaltende, Alkohole wie z. B. Ethylenglykol, Propylenglykol-1,2 und -1,3, Butylenglykol-1,4, -1,3 und -2,3, Hexandiol-1,6, und -2,5, Octandiol-1,8, Neopentylglykol, 1,4-Bis-(hydroxymethyl)-cyclohexan, Diethylenglykol, Triethylenglykol, Tetraethylenglykol, Polyethylenglykole bis Molekulargewicht ca. 2.000, vorzugsweise ca. 1000, Glycerin, Trimethylolpropan und Pentaerythrit. Besonders bevorzugt ist der Einsatz von Ethylenglykol, Propylenglykol, Diethylenglykol, Polyethylenglykolen bis Molekulargewicht ca. 800, Butandiol-1,4, Hexandiol-1,6, Neopentylglykol, 1,4-Bis-(hydroxymethyl)-cyclohexan und Trimethylolpropan.

Bei der Umesterung kommen Malein- und/oder Fumarsäuredi(cyclo)alkylester und Di-, Tri- und/ oder Tetraole in solchen Mengen zum Einsatz, daß auf jede OH-Gruppe der Alkoholkomponente 0,8 bis 1,5, vorzugsweise 0,9 bis 1,3 Mol Maleinund/oder Fumarsäuredi(cyclo)alkylester entfallen.

Die Umesterung wird vorzugsweise in Substanz, d. h. in Abwesenheit eines Lösungsmittels, bei Temperaturen von 80 bis 250 °C, vorzugsweise 100 bis 220°C durchgeführt, wobei der entstehende Monoalkohol abdestilliert wird. Zweckmäßig werden dazu Umesterungskatalysatoren, beispielsweise Säuren, Basen oder organische Metallverbindungen, wie z. B. Zinn-II-dioctoat, Dibutylzinnoxid, Dibutylzinn-bis-(2-ethylhexylmercaptoacetat), Dibutylzinn-bis-(2-ethylhexoat), Dibutylzinndichlorid, Butylzinnsäure oder Mischungen dieser Katalysatoren verwendet. Die Umesterung verläuft in der Regel nahezu quantitativ.

Bei der Herstellung der ungesättigten Oligoester durch Veresterung von Maleinsäureanhydrid, Malein- und/oder Fumarsäure mit Di-, Tri- und/oder Tetraolen und Monoalkoholen ist Maleinsäureanhydrid als Carbonsäurekomponente bevorzugt.

Für die Veresterung geeignete Di-, Tri- und/oder Tetraole sind solche Verbindungen, wie sie zuvor schon bei der Umesterung genannt wurden.

Bei den für die Veresterung geeigneten Monoalkoholen handelt es sich um einwertige, aliphatische, cycloaliphatische oder araliphatische, gegebenenfalls Ethersauerstoffatome aufweisende Alkohole mit 1 bis 18, vorzugsweise 1 bis 12 und besonders bevorzugt 1 bis 9 Kohlenstoffatomen, wie z. B. Methanol, Ethanol, I-und 2-Propanol, 1- und 2-Butanol, Isobutanol, tert.-Butanol, 1-, 2- und 3-Pentanol, 2- und 3-Methyl-1-butanol, 2,2-Dimethylpropanol, 1-, 2- und 3-Hexanol, 4-Methyl-2-pentanol, 2-Ethyl-1-butanol, 2,2-Diethylpropanol, 1-Octanol, 2-Ethyl-1-hexanol, 1-Nonanol, 3,5,5-Trimethyl-1-hexanol, 1-Decanol, 1-Dodecanol, 1-Tetradecanol, 1-Hexadecanol, 1-Octadecanol, Cyclohexanol, 2-, 3- und 4-Methylcyclohexanol, Hydroxymethylcyclohexan, 3,3,5-Trimethylcyclohexanol, 4-tert.-Butylcyclohexanol und Benzylalkohol. Gemische derartiger Monoalkohole sowie entsprechende Ethersauerstoff enthaltende Monoalkohole können ebenfalls verwendet werden. Um den herzustellenden Polyaminen spezielle hydrophile Eigenschaften zu verleihen, können bei der Herstellung der ungesättigten Oligoester monoveretherte Polyethylenglykole mit einem Molekulargewicht bis zu 1000, vorzugsweise 800 als Monoalkohole eingesetzt werden.

Die Veresterung erfolgt entweder in Substanz unter Wasserabspaltung bei Temperaturen von 80 bis 260 °C, vorzugsweise 100 bis 240 °C, wobei Reaktionswasser, gegebenenfalls im Vakuum oder Stickstoffstrom, abdestilliert wird oder in Lösung, wobei das Reaktionswasser mit einem geeigneten Lösemittel wie z. B. Benzol, Toluol, Xylol, Isooctan oder Cyclohexan azeotrop entfernt wird. Auch hier können übliche Veresterungskatalysatoren, beispielsweise Säuren, wie z. B. p-Toluolsulfonsäure und Schwefelsäure oder organische Metallverbindungen, wie z. B. Zinn-II-dioctoat oder Dibutylzinnoxid eingesetzt werden.

Bei den zur Herstellung der erfindungsgemäßen Polyamine A) gegebenenfalls mitzuverwendenden weiteren ungesattigten Verbindungen b) handelt es sich um Verbindungen mit 1 bis 4, vorzugsweise 1 bis 3 und besonders bevorzugt 2 bis 3 Doppelbindungen pro Molekül, beispielsweise Ester der Acryl- und Methacrylsäure wie z. B. Methyl(meth)acrylat, Ethyl(meth)acrylat, n-Butyl(meth)acrylat, iso-Butyl(meth)acrylat, 2-Ethylhexyl(meth)acrylat, Cyclohexyl(meth)acrylat, Ethandioldi(meth)acrylat, Butandioldi(meth)acrylat, Hexandioldi(meth)acrylat, Trimethylolpropantri(meth)acrylat und Pentaerythrittetra(meth)acrylat oder Di(cyclo)-alkylester der Malein- oder Fumarsäure, wie sie z. B. für die zuvor beschriebene Umesterung zum Einsatz gelangen. Auch Veresterungsprodukte der Acrylund/oder Methacrylsäure mit 1- bis 4-wertigen Ethersauerstoffatomen aufweisenden Alkoholen, wie z B Polyethylenglykole bis Molekulargewicht 2.000, sind als Komponente b) geeignet

Bevorzugt sind di- und trifunktionell ungesättigte Verbindungen, wie z. B. Ethandioldi(meth)acrylat, Butandioldi(meth)acrylat, Hexandioldi(meth)acrylat, Trimethylolpropantri(meth)acrylat und Veresterungsprodukte der Acryl- und/oder Methacrylsäure mit Ethersauerstoffatome aufweisenden Di- und Triolen, wie z. B. Polyethylenglykolen bis Molekulargewicht von ca. 1000 und besonders bevorzugt Ethandioldiacrylat, Butandioldiacrylat, Hexandioldiacrylat, Trimethylolpropantriacrylat und Veresterungsprodukte der Acrylsäure mit Ethersauerstoffatome aufweisenden Di- und Triolen, wie z. B. Polyethylenglykolen bis Molekulargewicht ca. 800.

Bei den (cyclo)aliphatischen Diaminen c) handelt es sich um Verbindungen mit zwei primären Aminogruppen mit der allgemeinen Formel (I)

NH₂-R-NH₂ (I),

in der R für einen C₂-C₂₄-aliphatischen oder C₃-C₂₄-cycloaliphatischen Rest steht.

Vorzugsweise steht R für einen aliphatischen Rest mit 2 bis 15 C-Atomen und für einen cycloaliphatischen Rest mit 6 bis 15 C-Atomen, besonders bevorzugt für einen aliphatischen Rest mit 2 bis 12 C-Atomen und einen cycloaliphatischen Rest mit 6 bis 13 C-Atomen.

Beispielhaft zu nennen sind Ethylendiamin, 1,2- und 1,3-Propylendiamin, 1,4-Diaminobutan, 1,6-Diaminohexan, 2,2,4- und 2,4,4-Trimethyl-1,6-diaminohexan, 1,4-Diaminocyclohexan, 3-Aminomethyl-3,5,5-trimethylcyclohexylamin (Isophorondiamin), 2-(Aminomethyl)-3,3,5-trimethylcyclopentylamin, Bis-(4-aminocyclohexyl)-methan, Bis-(4-amino-3-methylcyclohexyl)-methan, 1-Amino-1-methyl-3(4)-aminomethylcyclohexan, Bis-(4-mino-3,5-diethylcyclohexyl)-methan, Bis-aminomethyl-hexahydro-4,7-methanoindan, 2,3-, 2,4- und 2,6-Diamino-1-methylcyclohexan bzw. Gemische dieser Diamine.

Gegebenenfalls können weitere aminofunktionelle Verbindungen d) eingesetzt werden wie aliphatische, cycloaliphatische und/oder araliphatische, gegebenenfalls Ethersauerstoffatome aufweisende, Monoamine mit einer primären oder sekundären Aminogruppe wie beispielsweise Methylamin, Dimethylamin, Ethylamin, 2-Methoxyethylamin, Diethylamin, 1-Aminopropan, Di-n-propylamin, 2-Aminopropan, Diisopropylamin, 1-Aminobutan, Di-n-butylamin, 2-Aminobutan, Isobutylamin, Diisobutylamin, 1-Aminohexan, Dodecylamin, Octadecylamin, Cyclohexylamin, Dicyclohexylamin und Benzylamin; wie aliphatische, cycloaliphatische und/ oder heterocyclische Diamine mit einer primären, einer sekundären und gegebenenfalls einer tertiären Aminogruppe, wobei die sekundäre Aminogruppe auch Teil eines Ringsystems sein kann, wie z. B. N-Methylethylendiamin, N-Methylpropylendiamin, N-(2-Aminoethyl)-piperazin und 3-Amino-1,2,4-triazol; wie aliphatische Diamine mit zwei primären und mindestens einer sekundären Aminogruppe, wie z. B. Diethylentriamin, Triethylentetramin, Tetraethylenpentamin und Bis-(3-aminopropyl)-amin; wie alipathische, cycloaliphatische und/oder heterocyclische Diamine mit mindestens zwei sekundären Aminogruppen, wie z. B. N,N'-Dimethylethylendiamin, N,N'-Dimethyl-1,4-diaminocyclohexan und 2,5-Dimethylpiperazin, wie aliphatische, cycloaliphatische und/oder araliphatische Monoamine mit zusätzlichen Hydroxylgruppen, wie z. B. 2-Aminoethanol, 2-(Methylamino)-ethanol, Diethanolamin, 3-Amino-1-propanol, 1-Amino-2-propanol und 2-Amino-2-methyl-1,3-propandiol.

Die Herstellung der erfindungsgemäßen Polyamine A) erfolgt durch Umsetzung der ungesättigten Oligoester a), gegebenenfalls weiteren ungesättigten Verbindungen b), die als Michael-Akzeptor fungieren können, mit (cyclo)-aliphatischen Diaminen c), die zwei primäre Aminogruppen enthalten und gegebenenfalls weiteren aminofunktionellen Verbindungen d), die als Michael-Donator fungieren können bei 20 bis 160 °C, vorzugsweise 30 bis 140 °C und besonders bevorzugt bei 40 bis 120 °C in Substanz oder bevorzugt in einem inerten organischen Lösemittel bzw. Lösemittelgemisch, das mit Wasser mischoder verdünnbar ist.

Geeignete Lösungsmittel sind beispielsweise Ester wie z. B. Methylglykolacetat oder Methoxypropylacetat, Ketone, wie z. B. Aceton, Methylethylketon oder Methylisobutylketon, Etheralkohole wie z. B. Methylglykol, Ethylglykol, Isopropylglykol oder Butylglykol, Ether wie z. B. Ethylenglykoldimethylether, Diethylenglykoldimethylether oder Ethylenglykol-methyl-tert.-butylether und Heterocyclen wie z. B. N-Methylpyrrolidon bzw. Gemische derartiger Lösemittel.

Die hergestellten Polyamine A) haben im statistischen Mittel mindestens eine, vorzugsweise mindestens 2 und besonders bevorzugt 2 bis 4 primäre Aminogruppen (NH₂), was durch geeignete Mengenverhältnisse der Ausgangskomponenten a) bis d) erreicht werden kann.

Bevorzugte Polyamine A) werden durch Umsetzung der Ausgangskomponenten a) bis c) hergestellt. Sie weisen im statistischen Mittel 1 bis 6, vorzugsweise 1 bis 4 und besonders bevorzugt 2 bis 4 primäre Aminogruppen (NH₂) und 3 bis 12, vorzugsweise 3 bis 10 und besonders bevorzugt 4 bis 10 sekundäre Aminogruppen (NH) pro Molekül auf. Dabei liegt der Gesamtstickstoffgehalt (N = 14) bei 2,04 bis 17,41 %, vorzugsweise 2,82 bis 13,63 % und besonders bevorzugt 3,66 bis 12,36 %. Der Gehalt an primären Aminogruppen (NH₂ = 16) liegt bei 0,39 bis 6,53 %, vorzugsweise 1,07 bis 5,84 % und besonders bevorzugt 1,39 bis 5,30% und der Gehalt an sekundären Aminogruppen (NH = 15) liegt bei 1,82 bis 10,20%, vorzugsweise 2,01 bis 9,12 % und besonders bevorzugt 2,61 bis 8,28 %.

Zu den ebenfalls bevorzugten Polyaminen A) gehören Umsetzungsprodukte, die ausschließlich auf den Ausgangskomponenten a) und c) basieren. Sie weisen im statistischen Mittel 2 bis 6, vorzugsweise 2 bis. 5 und besonders bevorzugt 2 bis 4 primäre Aminogruppen (NH₂) und 2 bis 12, vorzugsweise 2 bis 10 und besonders bevorzugt 2 bis 9 sekundäre Aminogruppen (NH) pro Molekül auf. Dabei liegt der Gesamtstickstoffgehalt (N = 14) bei 1,92 bis 13,79 %, vorzugsweise 3,11 bis 13,79 % und besonders bevorzugt 3,94 bis 13,79 %. Der Gehalt an primären Aminogruppen (NH₂) liegt bei 0,73 bis 7,88 %, vorzugsweise 1,78 bis 7,88 % und besonders bevorzugt 2,25 bis 7,88 % und der Gehalt an sekundären Aminogruppen (NH = 15) liegt bei 1,37 bis 7,39 %, vorzugsweise 1,76 bis 7,39 % und besonders bevorzugt 2,11 bis 7,39 %.

Die Reaktion der Komponenten a) bis d), a) bis c), a) und c) bzw. a), c) und d) wird gegebenenfalls in einem inerten Lösungsmittel so lange durchgeführt bis der theoretische Feststoffgehalt nahezu oder vollständig erreicht ist.

Die Reihenfolge der Dosierung der Komponenten a) bis d) ist dabei frei wählbar. Die Komponenten a) und b) bzw. c) und d) können auch als Mischung zudosiert werden. Bevorzugt werden die Komponenten a), b), c), oder d) bzw. die Komponenten a) und b) oder c) und d) zusammen vorgelegt und die restlichen Komponenten gleichzeitig oder nacheinander zudosiert.

Die Umsetzung der Komponenten a) bis d); a) bis c); a) und c) bzw. a), c) und d) wird vorzugsweise in der Weise durchgeführt, daß die Komponente c) bzw. c) und d) gegebenenfalls in einem inerten Lösungsmittel vorgelegt und dann die Komponente a) bzw. a) und b) im Gemisch oder nacheinander bei der gewählten Reaktionstemperatur zudosiert wird. In einer bevorzugten Ausführungsform wird die Komponente c) in einem inerten Lösungsmittel vorgelegt, die Komponente b) anschließend bei der gewünschten Temperatur, die gegebenenfalls durch Kühlen konstant gehalten wird, zudosiert. Nach Reaktion der Komponenten b) und c) deren Vollständigkeit durch Festgehaltsbestimmung kontrolliert wird, erfolgt die Dosierung der Komponente a). Es wird dann so lange bei der gewählten Temperatur gerührt, bis der theoretische Festgehalt nahezu oder vollständig erreicht ist.

Werden nur die Komponenten a) und c) miteinander umgesetzt, ist in der Regel frei wählbar, welche Komponente gegebenenfalls in einem Lösungsmittel vorgelegt und welche zudosiert wird. Vorzugsweise wird die Komponente c) vorgelegt und die Komponente a) zudosiert.

Die durch das erfindungsgemäße Verfahren zugänglichen neuen Polyamine A) sind viskose oder feste, farblose bis gelbe Produkte, die in den beispielsweise zuvor genannten Lösemitteln klar löslich sind. In den genannten Lösemitteln gelöste Polyamine können, falls ihre Hydrophilie hoch genug ist, mit Wasser verdünnt werden, so daß Lösungen dieser Polyamine in einem Gemisch aus Wasser und organischem Lösemittel vorliegen.

Ist die Hydrophilie der erfindungsgemäßen Polyamine nicht ausreichend, können Anteile der vorliegenden Aminogruppen mit z. B. Monocarbonsäuren in ionische Gruppen überführt werden. Zur Neutralisation der Aminogruppen geeignete Monocarbonsäuren sind beispielsweise Ameisensäure, Essigsäure, Propionsäure oder Milchsäure. Prinzipiel können alle Aminogruppen der erfindungsgemäßen Polyamine neutralisiert werden, oftmals reicht es jedoch völlig aus, nur einen Teil, wie z. B. 5 bis 50 %, vorzugsweise 5 bis 40 % und besonders bevorzugt 5 bis 30 % der Aminogruppen mit Carbonsäuren zu neutralisieren. Solche neutralisierten Polyamine lassen sich gut in Wasser bzw. Lösemittel/Wasser-Gemischen lösen. Diese klaren, 30 bis 50%igen Lösungen sind in der Regel niedrigviskos und über einen Zeitraum von mehreren Monaten stabil.

Als Reaktionspartner der erfindungsgemäßen Polyamine A) zur Herstellung von vernetzten Lackierungen oder Beschichtungen sind wasserdispergierbare Polyisocyanate B) auf Basis aliphatischer und cycloaliphatischer Diisocyanate, wie beispielsweise 1,4-Diisocyanatobutan, 1,6-Diisocyanatohexan, 1,5-Diisocyanato-2,2-dimethylpentan, 2,2,4- bzw. 2,4,4- Trimethyl-1,6-diisocyanatohexan, 1,10-Diisocyanatodecan, 1,3- und 1,4-Diisocyanatocyclohexan, 1-Isocyanato-5-isocyanatomethyl-3,3,5-trimethylcyclohexan (Isophorondiisocyanat), 2,3-, 2,4- und 2,6-Diisocyanato-1-methylcyclohexan, 4,4'- und 2,4'-Diisocyanatodicyclohexylmethan, 1-Isocyanato-3(4)-isocyanatomethyl-1-methyl-cyclohexan oder beliebige Gemische solcher Diisocyanate, geeignet. Insbesondere auch daraus hergestellte Polyisocyanate (I) mit vorzugsweise Biuretgruppen, Allophanatgruppen, Carbodiimidgruppen, Uretdionstrukturen und Isocyanuratstrukturen können nach Hydrophilierung als wasserdispergierbare Vernetzerkomponente B) für die erfindungsgemäßen Polyamine A) eingesetzt werden. Solche Isocyanatgruppen aufweisende Basisverbindungen sind beispielsweise in den Patentschriften EP-A 0 003 505, DE-A 1 101 394, US-PS 3 358 010, US-A 3 903 127, US-A 4 324 879, US-PS 4 288 586, DE-A 3 100 262, DE-A 3 100 263, DE-A 3 033 860 und DE-A 3 144 672 beschrieben.

Als wasserdispergierbare Polyisocyanate (B) können auch Gemische von Polyisocyanaten, die nicht selbstdispergierbar sind, unter Zuhilfenahme von externen, ionischen oder nichtionischen Emulgatoren als Vernetzer eingesetzt werden.

In einer bevorzugten Ausführungsform des erfindungsgemäßen Verfahrens werden jedoch selbstdispergierende Polyisocyanate eingesetzt, wie beispielsweise wasserdispergierbare nichtionische Polyisocyanatgemische (B1) aus Polyisocyanaten und Polyether-modifizierten Polyisocyanaten mit cyclo-alihatisch und/oder aliphatisch gebundenen Isocyanatgruppen.

Vorzugsweise eingesetzt werden wasserdispergierbare Polyisocyanatgemische (B1) mit
i) einer mittleren NCO-Funktionalität von 1,8 bis 4,2,
ii) einem Gehalt an aliphatisch und/oder cycloaliphatisch gebundenen Isocyanatgruppen (berechnet als NCO, Molekulargewicht = 42) von 12,0 bis 21,5 Gew.-%, bezogen auf das Polyisocyanatgemisch (B1), und
iii) einem Gehalt an innerhalb von Polyetherketten angeordneten Ethylenoxideinheiten (berechnet als C₂H₄O, Molekulargewicht = 44) von 2 bis 20 Gew-%, bezogen auf das Polyisocyanatgemisch (B1), wobei die Polyetherketten im statistischen Mittel 5 bis 70 Ethylenoxideinheiten aufweisen.

Die wasserdispergierbaren Polyisocianatgemische (B1) können in an sich bekannter Weise durch Umsetzung einer Polyisocyanatkomponente (I) mit einer (mittleren) NCO-Funktionalität von 2,1 bis 4,4, vorzugsweise 2,3 bis 4,3, bestehend aus mindestens einem Polyisocyanat mit ausschließlich aliphatisch und/oder cycloaliphatisch gebundenen Isocyanatgruppen mit einem ein- oder mehwertigen, im statistischen Mittel 5 bis 70 Ethylenoxideinheiten aufweisenden Polyalkylenoxidpolyetheralkohol (II) unter Einhaltung eines NCO/OH-Äquivalentverhältnisses von mindestens 2:1, im allgemeinen von 4:1 bis ca. 1000:1, wobei im übrigen Art- und Mengenverhaltnisse der genannten Ausgangskomponenten so gewählt werden, daß die resultierenden Umsetzungsprodukte den unter i) bis iii) genannten Bedingungen entsprechen.

Es handelt sich bei den Polyisocyanatkomponenten (I) um solche mit Uretdionund/oder Isocyanurat-, Urethan- und/oder Allophanat-, Biuret- oder Oxadiazintrionstruktur, wie sie beispielsweise in DE-A 1 670 666, DE-A 3 700 209 und DE-A 3 900 053 oder in EP-A 336 205 und EP-A 339 396 beschrieben sind, die durch Modifizierung einfacher aliphatischer und/oder cycloaliphatischer Diisocyanate hergestellt werden können.

Geeignete Diisocyanate zur Herstellung solcher Polyisocyanatkomponenten (I) sind grundsätzlich solche des Molekulargewichtsbereichs 140 bis 400 mit aliphatisch und/oder cycloaliphatisch gebundenen Isocyanatgruppen wie sie schon zuvor genannt wurden.

Bevorzugt handelt es sich bei den zur Herstellung der wasserdispergierbaren Polyisocyanatgemische eingesetzten Ausgangskomponenten (I) um im wesentlichen aus trimerem 1,6-Diisocyanatohexan und gegebenenfalls dimerem 1,6-Diisocyanatohexan bestehende Isocyanuratgruppen und gegebenenfalls Uretdiongruppen aufweisende Polyisocyanatgemische mit einem NCO-Gehalt von 19 bis 24 Gew.-%, bezogen auf die Komponente (I). Besonders bevorzugt werden als Komponente (I) die entsprechenden, weitgehend Uretdiongruppen-freien, Isocyanuratgruppen aufweisenden Polyisocyanate des genannten NCO-Gehalts eingesetzt, wie sie durch an sich bekannte, katalytische Trimerisierung von 1,6-Diisocyanatohexan erhalten werden und die vorzugsweise eine (mittlere) NCO-Funktionalität von 3,2 bis 4,2 aufweisen.

Bei der Komponente (II) handelt es sich um ein- oder mehrwertige im statistischen Mittel pro Molekül 5 bis 70, vorzugsweise 6 bis 60 Ethylenoxideinheiten aufweisende Polyalkylenoxidpolyetheralkohole, wie sie in an sich bekannter Weise durch Alkoxylierung geeigneter Startermoleküle zugänglich sind.

Zur Herstellung der Polyetheralkohole (II) können beliebige ein- oder mehrwertige Alkohole des Molekulargewichtsbereichs 32 bis 150, wie sie beispielsweise auch .gemäß EP-A 206 059 Verwendung finden, als Startermoleküle eingesetzt werden. Bevorzugt werden als Startermoleküle monofunktionelle Alkohole mit 1 bis 4 Kohlenstoffatomen verwendet. Besonders bevorzugt ist Methanol.

Für die Alkoxylierungsreaktion geeignete Alkylenoxide sind insbesondere Ethylenoxid und Propylenoxid, die in beliebiger Reihenfolge oder auch als Gemisch bei der Alkoxylierungsreaktion eingesetzt werden können.

Bei den Polyalkylenoxidpolyetheralkoholen (II) handelt es sich entweder um reine Polyethylenoxidpolyether oder um gemischte Polyalkylenoxidpolyether, die jeweil mindestens eine Polyetherkette enthalten, die mindestens 5, im allgemeinen 5 bis 70, vorzugsweise 6 bis 60 und besonders bevorzugt 7 bis 20 Ethylenoxideinheiten aufweist und deren Alkylenoxideinheiten zu mindestens 60 Mol-%, vorzugsweise zu mindestens 70 Mol-% aus Ethylenoxideinheiten bestehen.

Bevorzugte Polyetheralkohole (II) zur Herstellung der wasserdispergierbaren Polyisocyanatgemische B) sind monofunktionelle, auf einem aliphatischen, 1 bis 4 Kohlenstoffatome aufweisenden Alkohol gestartete Polyalkylenoxidpolyether, die im statistischen Mittel 6 bis 60 Ethylenoxideinheiten enthalten. Besonders bevorzugte Polyetheralkohole (II) sind reine Polyethylenglykolmonomethyletheralkohole, die im statistischen Mittel 7 bis 20 Ethylenoxideinheiten aufweisen.

Als nicht selbstdispergierbare Polyisocyanate werden bevorzugt Polyisocyanatkomponenten (I) in Mischung mit externen ionischen oder nichtionischen Emulgatoren eingesetzt. Solche Emulgatoren sind beispielsweise in Methoden der organischen Chemie, Houben-Weyl, Bd. XIV/1, Teil 1, Seite 190-208, Georg-Thieme-Verlag, Stuttgart 1961 oder in der US-PS 3 428 592 oder EP-A 13 112 beschrieben. Die Emulgatoren werden in einer die Dispergierbarkeit gewährleistenden Menge eingesetzt.

Die beim erfindungsgemäßen Verfahren eingesetzten wasserdispergierbaren Polyisocyanate können zur Erleichterung der Einarbeitung in die wäßrige Phase gegebenenfalls in einem gegenüber Isocyanatgruppen inerten Lösemittel gelöst werden. Geeignete Lösemittel sind z. B. Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol oder deren Gemische, aber auch Lösemittel wie Propylenglykoldiacetat, Diethylenglykoldimethylether, Diethylenglykolethyl- und -butyletheracetat, N-Methylpyrrolidon und N-Methylcaprolactam oder Gemische solcher Lösemittel. Diese Lösemittel werden den wasserdispergierbaren Polyisocyanaten gegebenenfalls in Mengen bis zu 90 Gew.-%, vorzugsweise höchstens 50 Gew.-% und besonders bevorzugt höchstens 20 Gew.-%, bezogen auf die entstehende Lösung, zugesetzt. Ganz besonders bevorzugt ist jedoch die Verwendung lösemittelfreier, wasserdispergierbarer Polyisocyanate.

Zur Herstellung der in den erfindungsgemäßen Beschichtungsmitteln vorliegenden Bindemittel werden die Polyaminkomponente A) und die (hydrophilierte) Polyisocyanatkomponente B) abgemischt und zwar so, daß die Mengenverhältnisse einem Äquivalentverhältnis von Isocyanatgruppen zu primären Aminogruppen von 0,5:1 bis 8:1, vorzugsweise 0,75:1 bis 6:1 und besonders bevorzugt 1,0:1 bis 4:1 entsprechen.

Weitere gegebenenfalls mitzuverwendende Hilfs- und Zusatzmittel sind z. B. Pigmente und Füllstoffe, wie Titandioxid, Bariumsulfat, Kreide, Ruß; Katalysatoren, wie z. B. Zinkoctoat, Zinnoctoat oder Dibutylzinndilaurat; Verlaufsmittel; Verdickungsmittel, Netz- und Dispergiermittel; ggf. Stabilisatoren, wie substituierte Phenole sowie Lichtschutzmittel, wie beispielsweise sterisch gehinderte Amine, wie sie in der DE-A 2 417 353 (= US-A 4 123 418 und US-A 4 110 304) und der DE-A 2 456 864 (= US-A 3 993 655 und US-A 4 221 701) beschrieben sind.

Die erfindungsgemäßen Beschichtungsmittel stellen bei Raumtemperatur flüssige Gemische bzw. Dispersionen mit einer Lagerstabilität von mehreren Stunden dar.

Zur Herstellung von Überzügen unter Verwendung der erfindungsgemäßen Beschichtungsmittel werden diese nach an sich bekannten Methoden, beispielsweise durch Spritzen, Tauchen, Fluten oder mit Hilfe von Walzen oder Rakeln auf beliebige hitzeresistente Substrate ein- oder mehrschichtig aufgetragen. Die erfindungsgemäßen Beschichtungsmittel eignen sich zur Herstellung von Überzügen auf Metall, Kunststoffen, Holz oder Glas. Die zu beschichtenden Substrate können vor der Beschichtung mit geeigneten Grundierungen versehen sein. Bei der erfindungsgemäßen Verwendung wird die Menge der eingesetzten erfindungsgemäßen Beschichtungsmittel im allgemeinen so bemessen, daß Trockenschichtdicken von ca. 5 bis 100 µm vorliegen. Es ist jedoch auch möglich, dickere Schichten herzustellen.

Die Aushärtung der erfindungsgemäßen Lacke und Beschichtungen erfolgt je nach Anwendung in einem Temperaturbereich von 0 - 120 °C, vorzugsweise zwischen 10 - 110 °C und besonders bevorzugt 20 - 100 °C. Die ausgehärteten Überzüge weisen hervorragende lacktechnische Eigenschaften, insbesondere hohe Härte sowie sehr gute Lösemittel- und Wasserbeständigkeit, auf. Sie finden vor allem Anwendung in der Holz und Möbellackierung, in der allgemeinen Industrielackierung, in der Autoreparatur- und Großfahrzeuglackierung, auf dem Korrosionsschutzsektor sowie im Fahrzeugbereich als Füller und Decklackierung.

### Beispiele

Alle Prozentangaben beziehen sich auf Gewichtsprozente.

### I. Allgemeine Herstellvorschrift für die ungesättigten Oligoester a) (Veresterungsverfahren)

Maleinsäureanhydrid und das entsprechende Diol oder Polyol werden in einen Dreihalskolben mit Rührer, Ruckflußkuhler, Thermometer und Stickstoffeinleitung eingewogen und bei 80 bis 150°C so lange gerührt, bis die Anhydridbande bei ca. 1845 cm⁻¹ im IR-Spektrum nahezu oder vollständig verschwunden ist. Dann werden der entsprechende Monoalkohol, ein Veresterungskatalysator und ein Wasserschleppmittel zugegeben Die Zugabe erfolgt bei einer Temperatur, die unterhalb der Siedetemperatur des Monoalkohols und des Schleppmittels liegt. Anschließend wird so lange am Wasserabscheider gekocht, bis die theoretische Wassermenge abgeschieden ist, bzw. bis sich kein Wasser mehr abscheidet. Danach werden das Schleppmittel und gegebenenfalls überschüssiger Monoalkohol im Vakuum vollständig abdestilliert. Der ungesättigte Oligoester bleibt als farblose bis leicht gelblich gefärbte, niedrigviskose Flüssigkeit zurück.

### II. Allgemeine Herstellvorschrift für die ungesättigten Oligoester a) (Umesterungsverfahren).

Der Maleinsäuredi(cyclo)alkylester und das entsprechende Diol oder Polyol und gegebenenfalls ein Umesterungskatalysator werden in einen Dreihalskolben mit Rührer, Thermometer, Stickstoffeinleitung und Destillationseinrichtung eingewogen und unter Rühren bis zur beginnenden (Cyclo)alkanolabspaltung auf ca. 100 bis 180°C aufgeheizt, Die Reaktion wird so lange fortgeführt, bis die theoretische Menge (Cyclo)alkanol abdestilliert ist bzw. bis keine (Cyclo)alkanolabspaltung mehr erfolgt. Danach wird auf Raumtemperatur abgekühlt und der ungesättigte Oligoester als nahezu farblose Flussigkeit erhalten. In der nachfolgenden Tabelle 1 sind die Zusammensetzungen und die Kenndaten der hergestellten ungesättigten Oligoester angegeben. Die Oligoester Nr 1 bis 3 wurden nach dem Veresterungsverfahren und die Oligoester Nr 4 und 5 nach dem Umesterungsverfahren synthetisiert.

**Tabelle 1:**

| Zusammensetzungen und Kenndaten der ungesättigten Oligoester Einwaagen in g | | | | | |
|---|---|---|---|---|---|
| **Beispiel Nr.** | **1** | **2** | **3** | **4** | **5** |
| Maleinsäuredimethylester | - | - | - | 288 | 576 |
| Maleinsäureanhydrid | 196 | 294 | 294 | - | - |
| Hexandiol-1,6 | 59 | - | - | 136 | - |
| Polyethylenglykol MG: 400 | 200 | 600 | - | - | 880 |
| Trimethylolpropan | - | - | 134 | - | - |
| n-Butanol | 155 | 216 | 266 | - | - |
| ®Fascat 4101¹⁾ | - | - | - | 0,08 | 0,26 |
| p-Toluolsulfonsäure | 3,0 | 5,5 | 3,3 | - | - |
| Toluol | 260 | 500 | 200 | - | - |
| Säurezahl (mg KOH/g) | 5,6 | 5,8 | 4,6 | 1,0 | 0,8 |
| Viskosität bei 23°C, mPas (DIN 53 019) | 202 | 602 | 324 | 283 | 675 |

| | | | | | |
|---|---|---|---|---|---|
| ¹⁾ Umesterungskatalysator von Elf Atochem | | | | | |

### III. Allgemeine Herstellvorschrift für die erfindungsgemäßen Polyamine A)

In einem 2-l-Vierhalskolben mit Rührer, Rückflußkühler, Thermometer und Stickstoffeinleitung wird Teil I vorgelegt und auf 60 - 80 °C aufgeheizt. Anschließend wird Teil II innerhalb 1 Stunde zudosiert. Falls es sich bei Teil II um ein ungesättigtes Acrylat b) handelt, wird 1 Stunde bei 80 °C gerührt, anschließend Teil III in 1 Stunde zudosiert und dann so lange bei 80 °C gerührt, bis der theoretische Feststoffgehalt erreicht ist. Falls es sich bei Teil II um einen ungesättigten Oligoester a) handelt, wird so lange bei 80 °C gerührt, bis der theoretische Feststoffgehalt erreicht ist und ggf. anschließend, falls vorgesehen, Teil III innerhalb 1 Stunde zudosiert und dann so lange bei 80 °C gerührt, bis der theoretische Feststoffgehalt erreicht ist. Danach wird bei 80 °C Teil IV unter intensivem Rühren zugegeben, noch ca. 15 bis 30 Minuten nachgerührt und dann auf Raumtemperatur abgekühlt, wobei die Polyamine A) als gelblich gefärbte Lösungen erhalten werden. In Tabelle 2 sind die Zusammensetzungen und in Tabelle 3 die Kenndaten der erhaltenen erfindungsgemäßen Polyamine angegeben.

**Tabelle 2:**

| Zusammensetzungen der erfindungsgemäßen wässrigen Polyamine A), Einwaagen in g | | | | | | | |
|---|---|---|---|---|---|---|---|
| **Polyamine** | **A1** | **A2** | **A3** | **A4** | **A5** | **A6** | **A7** |
| Teil I | | | | | | | |
| N-Methylpyrrolidon | 71,8 | 133,8 | 59,2 | 70,1 | 93,8 | 79,4 | 100 |
| isophorondiamin | 115,4 | - | 94,7 | 114.3 | - | 139,4 | 131,4 |
| 4,4'-Diaminodicyclohexyl-methan | - | 113,7 | - | - | 158,9 | - | - |

| Teil II | | | | | | | |
|---|---|---|---|---|---|---|---|
| Trimethylolpropantriacrylat | 57,4 | 32,1 | - | 56,9 | 44,2 | 34,7 | 32,7 |
| unges. Oligoester aus Beispiel Nr. 3 | - | - | 94,9 | - | - | - | - |

| Teil III | | | | | | | |
|---|---|---|---|---|---|---|---|
| ungesättigter Oligoester aus Beispiel | | | | | | | |
| Nr. 1 | - | - | - | 109,0 | 171.5 | - | - |
| Nr. 2 | 137,4 | 153,3 | 112,7 | - | - | - | - |
| Nr. 4 | - | - | - | - | - | 126.5 | - |
| Nr. 5 | - | - | - | - | - | - | 220 |
| Maleinsäuredimethylester | - | - | - | - | - | 16,9 | 15,9 |

| Teil IV | | | | | | | |
|---|---|---|---|---|---|---|---|
| Essigsäure (100%-ig) | 18,0 | 10,1 | 8,4 | 16,6 | 28,1 | 27,7 | - |
| Wasser (entionisiert) | 600,0 | 557,0 | 630,1 | 633,1 | 503,5 | 575,4 | 500 |

**Tabelle 3:**

| Kenndaten der erfindungsgemäßen wässrigen Polyamine A) | | | | | | | |
|---|---|---|---|---|---|---|---|
| **Polyamine** | **A1** | **A2** | **A3** | **A4** | **A5** | **A6** | **A7** |
| Festgehalt, % | 30,5 | 29,7 | 29,5 | 29,4 | 39.7 | 34,2 | 40,1 |
| | | | | | | | |
| Equivalentgewicht, g/mol | | | | | | | |
| NH₂ + NH (berechnet) | 952 | 1096 | 1027 | 936 | 957 | 849 | 647 |
| NH₂ + NH + NH₃⁺ (berechn.) | 737 | 923 | 898 | 746 | 661 | 610 | - |

### IV. Herstellung eines wasserdispergierbaren Polyisocyanats B)

1,0 Val eines Isocyanuratgruppen-haltigen Polyisocyanats auf Basis von 1,6-Diisocyanatohexan mit einem NCO-Gehalt von 21,5 % und einer Viskosität von 3.000 mPa·s (23°C) wird bei Raumtemperatur unter Rühren mit 0,08 Val eines auf Methanol gestarteten, monofunktionellen Polyethylenoxidpolyethers mit einem mittleren Molekulargewicht von 350 g/mol versetzt. Danach wird das Gemisch auf 100°C erwärmt und anschließend 3 Stunden bei 100°C gerührt, wobei die Additionsreaktion erfolgt. Nach Abkühlen auf Raumtemperatur wird ein praktisch farbloses klares Polyisocyanatgemisch erhalten. Der NCO-Gehalt beträgt 17,3%, die Viskosität 3050 mPa×s (23°C).

### V. Verwendungsbeispiel

Die Polyamine A1 bis A7 werden mit dem wasserdispergierbaren Polyisocyanat B) so kombiniert, daß ein Verhältnis von NH₂- + NH- + NH₃⁺-Gruppen zu Isocyanatgruppen von ca. 1 : 1,5 vorliegt. Dazu wird zunächst eine Dispersion des Polyisocyants in Wasser hergestellt, indem das 100%ige Polyisocyanat B) unter gutem Rühren in eine solche Menge Wasser dosiert wird, daß eine 30%ige Dispersion des Polyisocyanats in Wasser vorliegt. Diese Polyisocyanatdispersion wird mit der entsprechenden Menge wässriger Polyaminlösung und zusätzlichem Wasser unter intensivem Rühren innig vermischt, sodaß 25- bis 30%ige wässrige Reaktivmischungen resultieren. Diese Mischungen haben eine Lagerstabilität von ca. 1 bis 4 Stunden. Von den Mischungen werden Lackfilme mit einer Naßfilmstärke von 240 um auf Glasplatten appliziert und 24 Stunden bei Raumtemperatur getrocknet. Danach wird die Wasser- und Ethanolbeständigkeit geprüft. Das geschieht durch Auflegen eines mit dem jeweiligen Prüfmittel getränkten Wattebauschs auf den Lackfilm, wobei der aufgelegte Wattebausch mit einem Urglas abgedeckt wird. Auf diese Weise erfolgt die Belastung mit Ethanol 1 Minute und mit Wasser 20 Minuten. Nach der Einwirkung wird der Lackfilm beurteilt, wobei die Benotung 0 bedeutet, daß der Lackfilm völlig in Ordnung ist und die Benotung 5 bedeutet, daß der Lackfilm an der belasteten Stelle beschädigt bzw. aufgelöst ist.

Zusätzlich wird die Lösemittelbeständigkeit der Filme noch durch einen Wischtest mit einem Ethanol-getränkten Wattebausch geprüft. Angegeben wird die Anzahl der Doppelhübe, nach denen der Lackfilm ohne sichtbare Veränderung bleibt. Mehr als 200 Doppelhübe pro Film wurden nicht durchgeführt.

In der nachfolgenden Tabelle 4 sind die Zusammensetzungen der erfindungsgemäßen Bindemittelkombinationen 1 bis 7 sowie die Härte und die Lösemittelbeständigkeit der entsprechenden Lackfilme als Grad der Vernetzung aufgeführt.

**Tabelle 4:**

| Zusammensetzungen und Lösemittelbeständigkeit von Lacken auf Basis der erfindungsgemäßen Polyamine A1 bis A7. Mengenangaben in g | | | | | | | |
|---|---|---|---|---|---|---|---|
| **Verwendungsbeispiel** | **1** | **2** | **3** | **4** | **5** | **6** | **7** |
| Polyamin | 15,0 g A1 | 15,0 g A2 | 15,0 g A3 | 15,0 g A4 | 15,0 g A5 | 15,0 g A6 | 15,0 g A7 |
| Polyisocyanat B) | 7,41 g | 5,92 g | 6,08 g | 7,32 g | 8,26 g | 8,95 | 8,44 |
| Wasser | 25,83 g | 20,70 g | 21,36 g | 23,76 g | 32,28 g | 30,87 g | 34,32 g |
| Pendeldämpfung (s) | 175 | 168 | 156 | 178 | 163 | 173 | 185 |
| Anlösbarkeit¹⁾: | | | | | | | |
| 1 Minute Ethanol | 0 | 1 | 1 | 0 | 1 | 0 | 1 |
| 20 Minuten Wasser | 0 | 0 | 0 | 0 | 0 | 0 | 1 |
| | | | | | | | |
| Wischtest, Anzahl der Doppelhübe mit: | | | | | | | |
| Ethanol | 200 | 200 | 187 | 200 | 183 | 200 | 175 |
| Wasser | 200 | 200 | 200 | 200 | 200 | 200 | 183 |

| | | | | | | | |
|---|---|---|---|---|---|---|---|
| ¹⁾ 0 = bester Wert (Lackfilm ohne sichtbare Veränderung), 5 = schlechtester Wert (Lackfilm aufgelöst). | | | | | | | |

### Diskussion der Resultate

Mit Lacken auf Basis der erfindungsgemäßen Polyamine A1 bis A7 und einem hydrophilierten unblockierten Polyisocyanat können klare, sehr gut verlaufende Beschichtungen hergestellt werden, die nach 24 Stunden bei Raumtemperatur eine hohe Härte sowie eine sehr gute Beständigkeit gegen Ethanol und Wasser besitzen.

## Patentansprüche

1. Wässrige Bindemittelkombination, bestehend aus Polyaminen A), die durch Umsetzung von
a) ungesättigten Oligoestem auf Basis von Maleinsäureanhydrid und Diolen mit einem Molekulargewicht von <1.000 und Monoalkoholen mit 1 bis 10 Kohlenstoffatomen im Alkylrest mit im statistischen Mittel 2 bis 4 Doppelbindungen pro Molekül,
b) gegebenenfalls weiteren als Michael-Akzeptor geeigneten ungesättigten Verbindungen mit im statistischen Mittel 1 bis 4 Doppelbindungen pro Molekül,
c) (cyclo)aliphatischen Diaminen mit zwei primären Aminogruppen und
d) gegebenenfalls weiteren als Michael-Donator geeigneten aminofunktionellen Verbindungen
hergestellt werden, und wasserdispergierbaren Polyisocyanaten mit freien ' Isocyanatgruppen.

2. Wässrige Bindemittelkombination gemäß Anspruch 1, **dadurch gekennzeichnet, dass** die Polyisocyanate wasserdispergierbare nichtionische Polyisocyanatgemische (B1) aus Polyisocyanaten und Polyether-modifizierten Polyisocyanaten mit cycloaliphatisch und/oder aliphatisch gebundenen Isocyanatgruppen sind.

3. Wässrige Bindemittelkombination gemäß Anspruch 2, **dadurch gekennzeichnet, dass** das Polyisocyanatgemisch (B1)
i) eine mittlere NCO-Funktionalität von 1,8 bis 4,2
ii) einen Gehalt an aliphatisch und/oder cycloaliphatisch gebundenen Isocyanatgruppen (berechnet als NCO, Molekulargewicht = 42) von 12,0 bis 21,5 Gew.-%, bezogen auf das Polyisocyanatgemisch (B1), und
iii) einen Gehalt an innerhalb von Polyetherketten angeordneten Ethylenoxideinheiten (berechnet als C₂H₄O, Molekulargewicht = 44) von 2 bis 20 Gew.-%, bezogen auf das Polyisocyanatgemisch (B1) aufweist, wobei die Polyetherketten im statistischen Mittel 5 bis 70 Ethylenoxideinheiten aufweisen.

4. Verfahren zur Herstellung der Bindemittelkombination gemäß Anspruch 1, **dadurch gekennzeichnet, dass** die Polyaminkomponente A) und die hydrophilierte Polyisocyanatkomponente B) in der Weise abgemischt wurden, dass die Mengenverhältnisse einem Äquivalentverhältnis von Isocyanatgruppen zu primären Aminogruppen von 0,5:1 bis 8:1 entspricht.

5. Verwendung der Bindemittelkombinationen gemäß Anspruch 1 zur Herstellung von bei Temperaturen zwischen 0°C und 120°C härtbaren Beschichtungen.

6. Verwendung gemäß Anspruch 5 für Autoreparaturlacke und Großfahrzeuglacke.

7. Verwendung gemäß Anspruch 5 für Automobilfüller und Automobildecklacke.

8. Verwendung gemäß Anspruch 5 für Holz-, Kunststoff-, allgemeine Industrielacke und Korrosionsschutzanwendungen.

## Claims

1. Aqueous binder combination, consisting of polyamines A), produced by the reaction of
a) unsaturated oligoesters based on maleic anhydride and diols with a molecular weight of < 1,000 and monoalcohols containing 1 to 10 carbon atoms in the alkyl radical and containing, as a statistical average, 2 to 4 double bonds per molecule,
b) optionally other unsaturated compounds which are suitable as Michael acceptors and which contain, as a statistical average, 1 to 4 double bonds per molecule,
c) (cyclo)aliphatic diamines containing two primary amino groups, and
d) optionally other amino-functional compounds which are suitable as Michael donors,
and water-dispersible polyisocyanates containing free isocyanate groups.

2. Aqueous binder combination according to claim 1, **characterised in that** the polyisocyanates are water-dispersible, non-ionic polyisocyanate mixtures (B1) of polyisocyanates and polyether-modified polyisocyanates containing cycloaliphatically and/or aliphatically bound isocyanate groups.

3. Aqueous binder combination according to claim 2, **characterised in that** the polyisocyanate mixture (B1) has
i) a mean NCO functionality of 1.8 to 4.2
ii) a content of aliphatically and/or cycloaliphatically bound isocyanate groups (calculated as NCO, molecular weight = 42) of 12.0 to 21.5 % by weight, based on the polyisocyanate mixture (B1), and
iii) a content of ethylene oxide units arranged inside polyether chains (calculated as C₂H₄O, molecular weight = 44) of 2 to 20 % by weight, based on the polyisocyanate mixture (B1), wherein the polyether chains, as a statistical average, contain 5 to 70 ethylene oxide units.

4. Method for producing the binder combination according to claim 1, **characterised in that** the polyamine component A) and the polyisocyanate component B) which has been rendered hydrophilic were mixed in such a way that the quantity ratios correspond to an equivalent ratio of isocyanate groups to primary amino groups of 0.5 : 1 to 8 : 1.

5. Use of the binder combination according to claim 1 for producing coatings which can be cured at temperatures between 0°C and 120°C.

6. Use according to claim 5 for car repair lacquers and large vehicle lacquers.

7. Use according to claim 5 for automotive fillers and automotive finishes.

8. Use according to claim 5, for lacquers for wood and plastics materials, general industrial lacquers and corrosion protection applications.

## Revendications

1. Liants combinés aqueux consistant en polyamines A), elles-mêmes obtenues par réaction de :
a) des oligoesters insaturés à base de l'anhydride maléique et de diols de poids moléculaire inférieur à 1 000 et de monoalcools contenant 1 à 10 atomes de carbone dans le groupe alkyle avec, en moyenne statistique, deux à quatre doubles liaisons par molécule,
b) le cas échéant d'autres composés insaturés capables d'exercer la fonction d'accepteurs de Michael, avec en moyenne statistique une à quatre doubles liaisons par molécule,
c) des diamines (cyclo)aliphatiques à deux groupes amino primaires, et
d) le cas échéant, d'autres composés à fonctions amino capables d'exercer la fonction de donateur de Michael,
et des polyisocyanates dispersables à l'eau, à groupes isocyanates libres.

2. Liants combinés aqueux selon la revendication 1, **caractérisés en ce que** les polyisocyanates sont des mélanges de polyisocyanates non ioniques dispersables à l'eau (B1) consistant en polyisocyanates et polyisocyanates à modification polyéther, à groupes isocyanates à liaisons cycloaliphatiques et/ou aliphatiques.

3. Liants combinés aqueux selon la revendication 1, **caractérisés en ce que** le mélange de polyisocyanates (B1)
i) a une fonctionnalité moyenne en NCO de 1,8 à 4,2,
ii) a une teneur en groupes isocyanates à liaisons aliphatiques et/ou cycloaliphatiques (exprimée en NCO, poids équivalent 42) de 12,0 à 21,5 % de son poids, et
iii) a une teneur en motifs d'oxyde d'éthylène disposés à l'intérieur de chaînes de polyéther (exprimée en C₂H₄O, poids équivalent 44) de 2 à 20 % de son poids, les chaînes de polyéther contenant en moyenne statistique 5 à 70 motifs d'oxyde d'éthylène.

4. Procédé pour la préparation des liants combinés selon la revendication 1, **caractérisé en ce que** l'on mélange le composant polyamine A et le composant polyisocyanate hydrophilisé B) dans des proportions relatives correspondant à un rapport de 0,5:1 à 8:1 entre les équivalents de groupes isocyanates et les équivalents de groupes amino primaires.

5. Utilisation des liants combinés selon la revendication 1, pour l'application de revêtements durcissables à des températures de 0 à 120°C.

6. Utilisation selon la revendication 5, pour la peinture d'automobiles après réparation et la peinture de gros véhicules.

7. Utilisation selon la revendication 5, pour des mastics pour automobiles et des peintures de couverture d'automobiles.

8. Utilisation selon la revendication 5, pour des applications sur bois, résines synthétiques, d'une manière générale les peintures industrielles et la protection contre la corrosion.
